# EUROPEAN PATENT SPECIFICATION

(11) **EP 3 447 339 B1**
(45) Date of publication and mention of the grant of the patent: **26.05.2021**
(21) Application number: 17382582.9
(22) Date of filing: 23.08.2017
(51) Int. Cl.: F16H 59/02

(54) **GEARSHIFT ASSEMBLY FOR MOTOR VEHICLES**
SCHALTGETRIEBEANORDNUNG FÜR KRAFTFAHRZEUGE
ENSEMBLE DE CHANGEMENT DE VITESSES POUR VÉHICULES À MOTEUR

(43) Date of publication of application: 27.02.2019
(73) Proprietor: Fico Triad, S.A., 08028 Barcelona (ES)
(72) Inventor: Albaladejo Pérez, Pedro, 08232 Viladecavalls (ES)
(74) Representative: ZBM Patents - Zea, Barlocci & Markvardsen

(56) References cited:
- EP-A1- 2 532 929
- EP-A1- 3 015 745
- DE-A1-102008 017 861
- US-A- 4 726 249

## Description

The present invention relates to gearshift assemblies for motor vehicles of the type having a shift-lever that can be pivoted about two different axes to control a motor vehicle transmission. Although the present gearshift assembly is preferably intended for manual transmissions.

### BACKGROUND

Gearshift assemblies for controlling transmissions in motor vehicles comprising a select lever pivotable about two different axes for driving corresponding cables to operate a select lever and a shift-lever, respectively, are known in the art. Examples of such gearshift assemblies are disclosed in EP1071894, EP0864780 and EP1531290.

A further example of such two-axis pivot gearshift assemblies for gearshift and selection operations is described in document US5560253. The gearshift assembly described in this document includes a housing, a lever extending along a longitudinal axis and rotatable relative to the housing about a first axis, and a select lever that is driven only by the main lever to rotate it about the first axis for selection operation. The shift-lever is driven exclusively by the lever to rotate it about a second axis for gearshift operation.

Document DE10238473 relates to a shift device with a lever that is connected to a driving cable. The lever is arranged to rotate around a select shaft and a gear shift shaft. The shafts are in a L-shaped arrangement:
Some of the above prior art solutions have not been proven to be efficient as they involve huge constraints in term of strength, requiring in some cases that the shift-lever is supported only in one side, while in other cases a lever-arm formed in or attached to the shift-lever is required to be shaped with a double bending such that the L-shaped arrangement that is required in the shift device disclosed in DE'473. This results in a big constraint in terms of strength while taking up a lot of space.

A need therefore exists for a compact and simplified gear shift assembly which in turn is still efficient.

DE102008017861 A1 discloses an operating device for a motor vehicle manual transmission, comprising with a manually operable manual shift lever for running through a plurality of longitudinal lanes and a transverse lane for shifting into different gears according to a H gate. The gate is configured such that a first forward gear has a greater adjustment travel than a third forward gear for increasing comfort when shifting lower gears, while increasing sportiness when shifting medium and high gears.

US4726249 discloses a shift lever assembly for manually operating a vehicle transmission. It comprises an elongate shift lever including a handle portion and a spherical coupling portion; a support including two support sheets cooperating with each other to provide a spherical support portion engaging the spherical coupling portion; and a pair of stationary retainer plates spacedapart with each other on opposite sides of the support. The stationary retainer plates are held in abutting contact with the support sheet outer surfaces, thereby holding the pair of support sheets in contact with each other at said adjoining surfaces thereof.

### SUMMARY

With the gearshift assembly for motor vehicles according to the present invention, the above disadvantages are at least reduced while a number of important advantages are obtained.

The present gearshift assembly mainly comprises a housing, a knob-lever, a select-lever, and a shift-lever.

The knob-lever is arranged extending along a longitudinal axis. The knob-lever is capable of rotation relative to the housing around a first axis and around a second axis. Said first and second axes define a plane that is intersected perpendicular by said longitudinal axis.

The select-lever is hinged to the housing and linked to the above-mentioned knob-lever such that the select-lever is exclusively driven by the knob-lever for performing a gear select movement as the knob-lever is rotated around the first axis. The shift-lever is also exclusively driven by the knob-lever for performing a gear shift movement as the knob-lever is rotated around the second axis, and such that the shift-lever is restrained to move in a single plane formed by the first axis and the longitudinal axis. For this purpose, the gearshift preferably includes a link such as a pin arranged for suitably hinging the knob-lever to the shift-lever. Rotation of the shift-lever could be used for sensing neutral or any other selected gear if required.

The knob-lever is arranged to rotate over the shift-lever along the first axis and transmits movement to the select-lever.

The gearshift further comprises at least one restraining mechanism. Such restraining mechanism is configured for restraining a range of motion of the shift-lever in a single plane formed by the first axis and the longitudinal axis. The restraining mechanism may be formed integral with the shift-lever or it may be a separate part. Still in other cases, the restraining mechanism may be formed integral with the housing or it may be a separate part. In any case, the restraining mechanism may comprise at least one bushing with an opening formed therein. It may be preferred to provide one bushing fitted at left and right sides or walls of the housing. In any case, the bushing or bushings is/are intended to support the shift-lever such that the knob-lever and the shift-lever are allowed to freely rotate together along the second axis. The bushings could be formed of two parts.

The restraining mechanism has the purpose of allowing the knob-lever and the shift-lever to be rotated together around the second axis, and prevent the shift-lever from being rotated around the first axis. The restraining mechanism is configured to allow the shift-lever to be rotated relative to the housing.

The gearshift further comprises a lever-arm attached to the knob-lever . The lever-arm is preferably connected to the knob-lever along at least one of its pivoting axis. This provides advantages in terms of strength and robustness of the lever-arm. For example, the lever-arm may be connected to the knob-lever along a first pivoting axis to move the select-lever but not the shift-lever.

The lever-arm is intended for driving the select-lever into a gear select movement. The lever-arm passes through an opening in the shift lever and further passes through the above-mentioned opening that is formed in the restraining mechanism. The opening is sized for allowing a limited range of motion of the lever-arm around said first axis, i.e. such that there is enough room for the movement of the lever-arm perpendicularly to the knob-lever. The opening is also adapted to allow rotation around the second axis.

A ball is formed at one end of the lever-arm. The diameter of the lever-arm end ball may be selected to be smaller than an opening formed in the shift-lever through which the lever-arm passes. In other examples, the opening in the shift-lever could include an opening such that the lever is inserted from the top.

The above-mentioned bushings are arranged to allow the lever-arm to pass there through with enough space for cinematic movement requirements for gear shift and gear select movements as stated above while limiting the shift-lever movement to a relative rotation around the second axis. However, a single bushing having an opening configured as a through hole may be used together with an opposite cap with no or blind hole. The diameter of the lever-arm end ball may be selected to be smaller than the opening of the restraining mechanism although other configurations are of course possible. In further examples, an end portion of the lever-arm may be screwed to the lever-arm.

The knob-lever and the shift-lever rotate together in the bushings along the second axis. Bushings provide enough room for the movement of the lever-arm, that is perpendicularly fixed on the knob-lever in the above example. On the other hand, the knob-lever rotates over the shift-lever along the first axis and said movement is driven to the select-lever.

The housing may be formed with at least two pieces between which the restraining mechanism is arranged. For example, the housing may be formed with two opposite side pieces. In other examples, the housing may be formed with top and bottom pieces. Such split housing configuration may be combined with the use of a sandwich-like restraining mechanism arranged there between. However, one-piece housing is preferred since screws are not required, resulting in savings in components and assembly time and the assembly becomes more robust. In any case, the housing may be configured to have an inner cavity configured to receive the shift-lever and/or to have at least one side opening for receiving the above restraining mechanism.

Assembling operations for the present gearshift assembly are very simple. The shift-lever is simply inserted into the housing. The restraining mechanism, for example, lateral bushings, are assembled and then the knob-lever is assembled with rotational movement along the first axis. The pin may be assembled along the direction of the first axis to hinge the knob-lever and the shift-lever. Finally, the rest of the components are assembled.

The above described two-axis pivot gearshift assembly where the shift-lever can be pivoted at either side provides important advantages in terms of the strength and robustness of the shift-lever itself. In addition, with such configuration. As a result of the above described configuration, transmission cables are driven in a single plane, such that push or pull forces by said cables are symmetrically balanced during shifting operations. As a result, a shifting assembly is provided having a very simple and compact design while reducing fatigue effects on the cables. In addition, with the above described configuration a ball joint type connection is not required for attachment of the transmission cables. This advantageously reduces manufacturing costs and complexity. In addition, compactness, particularly relating to overall width, is achieved as a result of the movement of the shift-lever in a single plane passing through the first axis and the longitudinal axis. The knob-lever is still allowed to efficiently perform a lateral movement, that is, a rotation along the first axis, which is transmitted exclusively to the select-lever, and a longitudinal movement, that is, a rotation along the second axis, which is transmitted exclusively to the shift-lever.

On the other hand, the fact that the lever-arm can be connected to the knob-lever along its pivoting axis represents a further advantage in terms of strength and robustness of the lever-arm while providing enough room for the operation of the shift-lever.

In prior art shifters, the shift-lever has to be supported only in one side when space limitations exist resulting in that the lever-arm is required to be shaped with complex shapes such as the above-mentioned double bending. This undesirably results in huge constraints, that may be even almost not functional, in terms of strength to working loads in manual transmission during shifting operation. This may also result in not efficient mechanisms regarding kinematic requirements in manual transmission shifters.

The above is overcome with a gearshift assembly according to claim 1.

Additional objects, advantages and features of examples of the present gearshift assembly for motor vehicles will become apparent to those skilled in the art upon examination of the description, or may be learned by practice thereof.

### BRIEF DESCRIPTION OF THE DRAWINGS

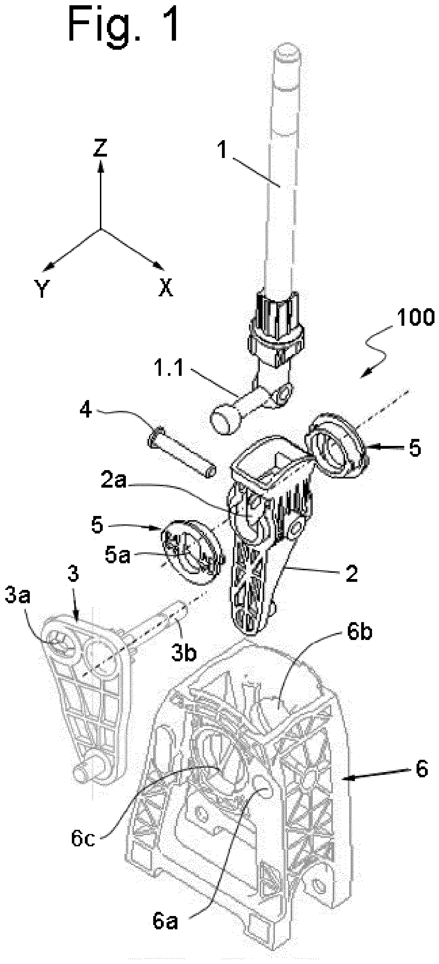

One embodiment of the present gearshift assembly for motor vehicles will be described in the following by way of a non-limiting example, with reference to the appended drawing where an exploded view thereof is shown.

### DETAILED DESCRIPTION OF EXAMPLES

A double axis pivot gearshift assembly 100 for a manual shift gear lever mechanism is described by referring to the drawing. In the example shown, the gearshift assembly 100 comprises a knob-lever 1, a shift-lever 2, a select-lever 3, and a housing 6.

The knob-lever 1 is arranged extending along a longitudinal axis Z which corresponds to a vertical axis in the drawing. The knob-lever 1 is capable of rotation relative to the housing 6 both around a first axis X and a second axis Y.

The select-lever 3 has a hinging shaft 3b projecting perpendicular thereto and extending into a receiving opening 6a formed in the housing 6. The select-lever 3 is thus hinged to the housing 6 around said hinging shaft 3b. The select-lever 3 is in turn linked to the knob-lever 1 such that the select-lever 3 is exclusively driven by the knob-lever 1 for performing a gear select movement as the knob-lever 1 is rotated around the first axis X.

The housing 6 is configured with an inner cavity 6b suitable to receive the shift-lever 2. The shift-lever 2 is hinged to the housing 6 by means of bushings 5 in openings 6c that are formed in the housing 6.

The knob-lever 1 is hinged to the shift-lever 2 by means of a pin 4. The shift-lever 2 is hinged to the knob-lever 1 and to the housing such that the shift-lever 2 is exclusively driven by the knob-lever 1 for performing a gear shift movement as the knob-lever 1 is rotated around the second axis Y, and such that the shift-lever 2 is restrained to move in a single plane XZ formed by the first axis X and the longitudinal axis Z.

The knob-lever 1 is arranged to rotate to the shift-lever 2 around the first axis X to transmit movement to the select-lever 3, the select-lever 3 in turn rotates to the housing 6 around an axis parallel to the second axis Y.

In the example shown, two bushings 5 are provided at opposite walls of the housing 6. One of said bushings 5 includes an opening configured as an elongated hole 5a through which a lever-arm 1.1 formed in the knob-lever 1 is allowed to pass. Said lever-arm 1.1 will be described further below. The bushings 5 are intended for restraining a range of motion of the shift-lever 2 in said single plane XZ formed by the first axis X and the longitudinal axis Z. The bushings 5 allow the knob-lever 1 and the shift-lever 2 to rotate together around the second axis Y, that is, only in said plane XZ, by virtue of the link between knob-lever 1 and shift-lever 2, and prevent the shift-lever 2 from being rotated around the first axis X, that is, in the plane YZ formed by the second axis Y and the longitudinal axis Z. The bushing 5 also allows the shift-lever 2 to be rotated relative to the housing 6.

The gearshift assembly 100 further comprises a lever-arm 1.1. The lever-arm 1.1 is attached to the knob-lever 1 and extends substantially perpendicular thereto as shown in the drawing. The purpose of the lever-arm 1.1 is to drive the select-lever 3 for gear select movement. For this purpose, the lever-arm 1.1 is adapted to be received into the above-mentioned opening 5a that is formed in bushing 5. The opening 5a is thus sized for allowing a determined range of motion of the lever-arm 1.1 up and down as the knob-lever 1 is rotated around the first axis X. The lever-arm 1.1 is thus allowed to perform a limited movement through the opening 5a of the bushings 5.

The lever-arm 1.1 is also arranged to pass through an opening 2a that is formed in the shift-lever 2 and through an opening 3a that is formed in the select-lever 3 for movement of the lever-arm 1.1 with the clearance allowed by the opening 5a of bushing 5. Although the lever-arm 1.1 can be moved with the clearance, the lever-arm 1.1 serves the purpose of performing a gear select movement as the knob-lever 1 is rotated around the first axis X by contacting the walls of the opening 3a.

Although only a number of particular embodiments and examples of the present gearshift assembly for motor vehicles have been disclosed herein, it will be understood by those skilled in the art that other alternative examples and/or uses and obvious modifications and equivalents thereof are possible, without departing from the scope of the appended claims.

## Claims

1. Gearshift assembly (100) for motor vehicles, the gearshift assembly (100) comprising:
- a housing (6);
- a knob-lever (1) extending along a longitudinal axis (Z) and capable of rotation relative to the housing (6) around a first axis (X) and around a second axis (Y), said first and second axes (X, Y) defining a plane (XY) that is intersected perpendicular by the longitudinal axis (Z);
- a select-lever (3) hinged to the housing (6) and linked to the knob-lever (1) such that the select-lever (3) is exclusively driven by the knob-lever (1) for performing a gear select movement as the knob-lever (1) is rotated around the first axis (X);
- a lever-arm (1.1) attached to the knob-lever (1) arranged for driving the select-lever (3);
- a shift-lever (2) hinged to the knob-lever (1) and to the housing (6) such that the shift-lever (2) is exclusively driven by the knob-lever (1) for performing a gear shift movement as the knob-lever (1) is rotated around the second axis (Y); and such that the shift-lever (2) is restrained to move in a single plane (XZ) formed by the first axis (X) and the longitudinal axis (Z) such that the shift-lever (2) is allowed to rotate around the second axis (Y) and is only movable in said single plane (XZ),
- at least one restraining mechanism comprising at least one bushing (5) with an opening (5a) formed therein, supporting the shift-lever (2) and allowing the knob-lever (1) and the shift-lever (2) to be rotated together around the second axis (Y) and preventing the shift-lever from being rotated around the first axis (X);
**characterized in that** the lever-arm (1.1) passes through an opening (2a) in the shift lever (2), and further passes through the opening (5a) of the bushing (5), and **in that** said opening (5a) of the bushing (5) is sized for allowing a limited range of motion of the lever-arm (1.1) around said first axis (X) and allowing rotation around the second axis (Y).

2. The gearshift (100) of claim 1, wherein the select-lever (3) has an opening (3a) in which the lever-arm (1.1) moves.

3. The gearshift (100) of claim 2, wherein the lever-arm (1.1) passes through the opening (3a).

4. The gearshift (100) of any of the preceding claims, wherein the shift-lever (2) moves relative to the housing (6) around the second axis (Y).

5. The gearshift (100) of any of the preceding claims, wherein the opening of at least one bushing (5) is an elongated hole (5a).

6. The gearshift (100) of any of the preceding claims, wherein the housing (6) has at least one side opening (6c) for receiving the restraining mechanism.

7. The gearshift (100) of any of the preceding claims, wherein it further comprises a pin (4) arranged for hinging the knob-lever (1) to the shift-lever (2).

8. The gearshift (100) of any of the preceding claims, wherein the housing (6) has an inner cavity (6b) configured to receive the shift-lever (2).

9. The gearshift (100) of claim 8, wherein the shift-lever (2) is hinged to the housing (6) by means of the bushing (5) in the opening (6c).

10. The gearshift (100) of any of the preceding claims, wherein the restraining mechanism is formed integral with the shift-lever (2).

11. The gearshift (100) of any of the claims 1-9, wherein the restraining mechanism is formed integral with the housing (6).

12. The gearshift (100) of any of the preceding claims, wherein the housing (6) is formed with at least two pieces between which the restraining mechanism is arranged.

13. The gearshift (100) of any of the preceding claims, wherein a ball is formed at one end of the lever-arm (1.1).

14. The gearshift (100) of claim 13, wherein the diameter of the lever-arm end ball is smaller than the opening (2a) formed in the shift-lever (2).

15. The gearshift (100) of claims 13, wherein the diameter of the lever-arm end ball is smaller than the opening (5a) of the restraining mechanism.

## Patentansprüche

1. Gangschaltanordnung (100) für Kraftfahrzeuge, wobei die Gangschaltanordnung (100) folgendes umfasst:
- ein Gehäuse (6);
- einen Knopfhebel (1), der sich entlang einer Längsachse (Z) erstreckt und relativ zum Gehäuse (6) um eine erste Achse (X) und um eine zweite Achse (Y) drehen kann, wobei die erste und die zweite Achse (X, Y) eine Ebene (XY) definieren, die durch die Längsachse (Z) senkrecht durchkreuzt wird;
- einen am Gehäuse (6) angelenkten und mit dem Knopfhebel (1) verbundenen Auswahlhebel (3), so dass der Auswahlhebel (3) ausschließlich durch den Knopfhebel (1) zur Durchführung einer Gangwahlbewegung angetrieben wird, wenn der Knopfhebel (1) um die erste Achse (X) gedreht wird;
- einen Hebelarm (1.1), der an dem Knopfhebel (1) angebracht ist, der zum Antreiben des Auswahlhebels (3) angeordnet ist;
- einen Schalthebel (2), der so am Knopfhebel (1) und am Gehäuse (6) angelenkt ist, dass der Schalthebel (2) ausschließlich durch den Knopfhebel (1) zur Durchführung einer Gangschaltbewegung angetrieben wird, wenn der Knopfhebel (1) um die zweite Achse (Y) gedreht wird; und so, dass die Bewegung des Schalthebels (2) auf eine einzelne Ebene (XZ) beschränkt wird, die durch die erste Achse (X) und die Längsachse (Z) gebildet wird, so dass der Schalthebel (2) um die zweite Achse (Y) drehen kann und nur in der einzelnen Ebene (XZ) bewogen werden kann,
- mindestens einen Rückhaltemechanismus umfassend mindestens eine Buchse (5) mit einer darin gebildeten Öffnung (5a), der den Schalthebel (2) stützt und eine gemeinsame Drehung des Knopfhebels (1) und des Schalthebels (2) um die zweite Achse (Y) ermöglicht und eine Drehung des Schalthebels um die erste Achse (X) verhindert;
**dadurch gekennzeichnet, dass** der Hebelarm (1.1) eine Öffnung (2a) des Schalthebels (2) durchgeht, und weiterhin die Öffnung (5a) der Buchse (5) durchgeht und dadurch, dass die Öffnung (5a) der Buchse (5) eine Größe hat, die einen beschränkten Bewegungsbereich des Hebelarms (1.1) um die erste Achse (X) sowie eine Drehung um die zweite Achse (Y) ermöglicht.

2. Die Gangschaltung (100) des Anspruchs 1, wobei der Auswahlhebel (3) eine Öffnung (3a) hat, in der sich der Hebelarm (1.1) bewegt.

3. Die Gangschaltung (100) des Anspruchs 2, wobei der Hebelarm (1.1) die Öffnung (3a) durchgeht.

4. Die Gangschaltung (100) von einem der vorhergehenden Ansprüche, wobei der Schalthebel sich (2) relativ zum Gehäuse (6) um die zweite Achse (Y) bewegt.

5. Die Gangschaltung (100) von einem der vorhergehenden Ansprüche, wobei die Öffnung von mindestens einer Buchse (5) ein längliches Loch (5a) ist.

6. Die Gangschaltung (100) von einem der vorhergehenden Ansprüche, wobei das Gehäuse (6) mindestens eine Seitenöffnung (6c) zum Aufnehmen des Rückhaltemechanismus hat.

7. Die Gangschaltung (100) von einem der vorhergehenden Ansprüche, wobei sie weiterhin einen Stift (4) umfasst, der zur gelenkigen Verbindung des Knopfhebels (1) an den Schalthebel (2) angeordnet ist.

8. Die Gangschaltung (100) von einem der vorhergehenden Ansprüche, wobei das Gehäuse (6) einen inneren Hohlraum (6b) hat, der konfiguriert ist, um den Schalthebel (2) aufzunehmen.

9. Die Gangschaltung (100) des Anspruchs 8, wobei der Schalthebel (2) in der Öffnung (6c) am Gehäuse (6) mittels der Buchse (5) angelenkt ist.

10. Die Gangschaltung (100) von einem der vorhergehenden Ansprüche, wobei der Rückhaltemechanismus einstückig mit dem Schalthebel (2) gebildet ist.

11. Die Gangschaltung (100) von einem der Ansprüche 1 bis 9, wobei der Rückhaltemechanismus einstückig mit dem Gehäuse (6) ausgebildet ist.

12. Die Gangschaltung (100) von einem der vorhergehenden Ansprüche, wobei das Gehäuse (6) mit mindestens zwei Teilen ausgebildet ist, zwischen denen der Rückhaltemechanismus angeordnet ist.

13. Die Gangschaltung (100) von einem der vorhergehenden Ansprüche, wobei ein Kugel an einem Ende des Hebelarms (1.1) gebildet ist.

14. Die Gangschaltung (100) des Anspruchs 13, wobei der Durchmesser des Endkugels des Hebelarms kleiner als die in dem Schalthebel (2) ausgebildete Öffnung (2a) ist.

15. Die Gangschaltung (100) des Anspruchs 13, wobei der Durchmesser des Endkugels des Hebelarms kleiner als die Öffnung (5a) des Rückhaltemechanismus ist.

## Revendications

1. Ensemble de changement de vitesse (100) pour véhicules à moteur, l'ensemble de changement de vitesse (100) comprenant :
- un boîtier (6) ;
- un bouton-levier (1) s'étendant le long d'un axe longitudinal (Z) et pouvant pivoter par rapport au boîtier (6) autour d'un premier axe (X) et autour d'un second axe (Y), lesdits premier et second axes (X, Y) définissant un plan (XY) qui est croisé perpendiculairement par l'axe longitudinal (Z) ;
- un levier de sélection (3) articulé sur le boîtier (6) et lié au bouton-levier (1) de telle sorte que le levier de sélection (3) est exclusivement entraîné par le bouton-levier (1) pour effectuer un mouvement de sélection de vitesse lorsque le bouton-levier (1) pivote autour du premier axe (X) ;
- un bras de levier (1.1) attaché au bouton-levier (1) agencé pour entraîner le levier de sélection (3) ;
- un levier de changement de vitesse (2) articulé sur le bouton-levier (1) et sur le boîtier (6) de façon que le levier de changement de vitesse (2) est exclusivement entraîné par le bouton-levier (1) pour effectuer un mouvement de changement de vitesse lorsqu'on fait pivoter le bouton-levier (1) autour du second axe (Y) ; et de façon que le mouvement du levier de changement de vitesse (2) est restreint à un seul plan (XZ) formé par le premier axe (X) et l'axe longitudinal (Z) de façon que le levier de changement de vitesse (2) peut pivoter autour du second axe (Y) et peut être déplacé seulement dans ledit plan (XZ),
- au moins un mécanisme de retenue comprenant au moins un coussinet (5) avec une ouverture (5a) formée dans son intérieur supportant le levier de changement de vitesse (2) et permettant le pivotement conjoint du bouton-levier (1) autour du second axe (Y) et empêchant le pivotement du levier de changement de vitesse autour du premier axe (X) ;
**caractérisé en ce que** le bras de levier (1.1) passe à travers une ouverture (2a) du levier de changement de vitesse (2), et passe en outre à travers l'ouverture (5a) du coussinet (5), et **en ce que** ladite ouverture (5a) du coussinet (5) a une dimension permettant une plage limitée de mouvement du bras de levier (1.1) autour dudit premier axe (X) et permettant le pivotement autour du second axe (Y).

2. Le système de changement de vitesse (100) de la revendication 1, dans lequel le levier de sélection (3) a une ouverture (3a) dans laquelle se déplace le bras de levier (1.1).

3. Le système de changement de vitesse (100) de la revendication 2, dans lequel le bras de levier (1.1) passe à travers l'ouverture (3a).

4. Le système de changement de vitesse (100) de l'une quelconque des revendications précédentes, dans lequel le levier de changement de vitesse (2) se déplace par rapport au boîtier (6) autour du second axe (Y).

5. Le système de changement de vitesse (100) de l'une quelconque des revendications précédentes, dans lequel l'ouverture d'au moins un coussinet (5) est un trou allongé (5a).

6. Le système de changement de vitesse (100) de l'une quelconque des revendications précédentes, dans lequel le boîtier (6) a au moins une ouverture latérale (6c) pour recevoir le mécanisme de retenue.

7. Le système de changement de vitesse (100) de l'une quelconque des revendications précédentes, dans lequel il comprend en outre une goupille (4) agencée pour articuler le bouton-levier (1) sur le levier de changement de vitesse (2).

8. Le système de changement de vitesse (100) de l'une quelconque des revendications précédentes, dans lequel le boîtier (6) a une cavité intérieure (6b) configurée pour recevoir le levier de changement de vitesse (2).

9. Le système de changement de vitesse (100) de la revendication 8, dans lequel le levier de changement de vitesse (2) est articulé sur le boîtier (6) moyennant le coussinet (5) dans l'ouverture (6c).

10. Le système de changement de vitesse (100) de l'une quelconque des revendications précédentes, dans lequel le mécanisme de retenue est formé d'une seule pièce avec le levier de changement de vitesse (2).

11. Le système de changement de vitesse (100) de l'une quelconque des revendications 1 à 9, dans lequel le mécanisme de retenue est formé d'une seule pièce avec le boîtier (6).

12. Le système de changement de vitesse (100) de l'une quelconque des revendications précédentes, dans lequel le boîtier (6) est formé avec au moins deux pièces entre lesquelles le mécanisme de retenue est agencé.

13. Le système de changement de vitesse (100) de l'une quelconque des revendications précédentes, dans lequel une rotule est formée à une extrémité du bras de levier (1.1).

14. Le système de changement de vitesse (100) de la revendication 13, dans lequel le diamètre de la rotule d'extrémité du bras de levier est plus petit que l'ouverture (2a) formée dans le levier de changement de vitesse (2).

15. Le système de changement de vitesse (100) de la revendication 13, dans lequel le diamètre de la rotule d'extrémité du bras de levier est plus petit que l'ouverture (5a) du mécanisme de retenue.
